# EUROPEAN PATENT SPECIFICATION

(11) **EP 3 816 484 B1**
(45) Date of publication and mention of the grant of the patent: **15.06.2022**
(21) Application number: 20201198.7
(22) Date of filing: 10.10.2020
(51) Int. Cl.: F16H 55/30

(54) **SPROCKET**
KETTENRAD
PIGNON

(30) Priority: 04.11.2019 SG 10201910226W
(43) Date of publication of application: 05.05.2021
(73) Proprietor: Sunstar Singapore Pte.Ltd., One-North 138543 (SG)
(72) Inventor: Tan, Wey Chin, Singapore 138543 (SG); Leong, Chee Onn, Singapore 138543 (SG); Brioschi, Cesare, 20832 Desio (MB) (IT); Basso, Davide, 20812 Limbiate (IT); Techadechareon, Ekaphon, Samutprakarn 10280 (TH); Sugimoto, Tatsunori, Samutprakarn 10280 (TH)
(74) Representative: Betten & Resch

(56) References cited:
- DE-A1- 19 943 000
- JP-A- 2002 294 667
- JP-A- 2004 044 659

## Description

### TECHNICAL FIELD

The present invention relates to a sprocket that engages with a roller chain to transmit power.

### BACKGROUND ART

As an example of sprockets, the following sprocket is proposed: a sprocket including a sprocket body having an outer periphery provided with a plurality of teeth engaging with a roller chain, and annular elastic bodies made of an elastic material and provided concentrically with the sprocket body on both sides thereof in the axial direction of the sprocket body. In this sprocket, an outer periphery of each annular elastic body is contactable with a link plate of the roller chain, thereby reducing noise caused due to engagement between the sprocket and the roller chain (see, for example, Patent Literature 1).

In addition, the following sprocket is also proposed: instead of the annular elastic bodies, columnar elastic bodies each having an axis on the line extending from the center of a sprocket body toward the center of a corresponding tooth bottom are provided at equal distances from the center of the sprocket body, and an outer periphery of each elastic body is brought into contact with a wide part of a link plate, thereby reducing noise caused due to engagement with the roller chain (see, for example, Patent Literature 2).

Further, the following sprocket is also proposed: a groove having an opening portion is provided at a tooth bottom portion of a sprocket body, an elastic body is provided in the groove, and the elastic body is provided with a protrusion protruding through the opening portion so that the protrusion comes into contact with a roller of a roller chain, thereby reducing noise caused due to engagement with the roller chain (see, for example, Patent Literature 3).

Further, the following sprocket is also proposed in JP2002294667: a sprocket body having an outer periphery provided with: a plurality of teeth engaging with a roller chain; and tooth grooves each provided between the teeth adjacent to each other, each of the tooth grooves being fittable with a roller of the roller chain, and a plurality of elastic bodies provided in the sprocket body, wherein the sprocket body is provided with through holes at positions apart from a center of the sprocket body at a certain distance, the through holes penetrating the sprocket body in a plate-thickness direction.

### CITATION LIST

### [PATENT LITERATURE]

[PTL 1] Japanese Unexamined Patent Application Publication No. 2004-19673
[PTL 2] Japanese Unexamined Patent Application Publication No. 2008-69804
[PTL 3] Japanese Unexamined Patent Application Publication No. 2001-27307

### SUMMARY OF THE INVENTION

### PROBLEMS TO BE SOLVED BY THE INVENTION

In the case of forming a sprocket using annular elastic bodies as in the invention described in Patent Literature 1, it is necessary to use annular elastic bodies having different diameters for individual sprocket bodies having different diameters, and thus plural types of annular elastic bodies need to be prepared, leading to a problem that the production cost for the annular elastic bodies inevitably increases.

On the other hand, in the case of using a plurality of columnar elastic bodies as in the invention described in Patent Literature 2, elastic bodies formed of the same member can be attached to sprockets having different sizes. Therefore, the production cost for the elastic bodies can be reduced. However, it is necessary to attach each of elastic bodies individually to the sprocket body. Therefore, there is a problem that work of attaching the elastic bodies to the sprocket body is complicated as compared to the invention described in Patent Literature 1.

An object of the present invention is to provide a sprocket that enables reduction of noise due to engagement with a roller chain, enables low-cost production without increase in the types of elastic bodies even for sprockets different in the number of teeth and the diameter, and enables improvement in productivity by decreasing the number of steps in attachment of elastic bodies.

### SOLUTION TO THE PROBLEMS

The present invention encompasses the following inventions.
(1) A sprocket including a sprocket body having an outer periphery provided with: a plurality of teeth engaging with a roller chain; and tooth grooves each provided between the teeth adjacent to each other, each of the tooth grooves being fittable with a roller of the roller chain, and a plurality of elastic bodies provided in the sprocket body, to be contactable with the roller chain, in which the sprocket body is provided with through holes at positions apart from a center of the sprocket body at a certain distance to respectively correspond to circumferential positions of the tooth grooves, the through holes penetrating the sprocket body in a plate-thickness direction, the elastic bodies each have a pair of partially-circular shaped side plate portions respectively provided in both side surfaces of the sprocket body to extend across the through holes adjacent to each other, and a plurality of connecting portions respectively inserted in the through holes adjacent to each other to connect the pair of the side plate portions, and each of the elastic bodies is divided into a pair of divided bodies at the connecting portions. As used herein, the wording "divided at a connecting portion" includes not only the case where the connecting portion is divided at a certain location in the length direction thereof, but also the case where the connecting portion is divided at any position.
(2) The sprocket according to the above (1), in which each of the side plate portions is provided with a contact portion that is contactable to a link plate forming the roller chain.
(3) The sprocket according to the above (2), in which each of the side plate portions is provided with a plurality of wide portions each corresponding to a corresponding one of the tooth grooves, and a narrow portion having a width narrower than a width of each of the wide portions, between the wide portions adjacent to each other, and the contact portion is provided in an outer periphery of the wide portions.
(4) The sprocket according to any one of the above (1) to (3), in which each of the through holes is provided with an opening portion opening to the corresponding one of the tooth grooves, and each of the connecting portions is provided with a protrusion protruding into the tooth groove through the opening portion so as to be contactable with the roller.
(5) The sprocket according to the above (4), in which the opening portion is provided at a position corresponding to a front side of the tooth groove in a rotation direction of the sprocket body.
(6) The sprocket according to any one of the above (1) to (5), in which the pair of the divided bodies are formed of a same member.
(7) The sprocket according to any one of the above (1) to (6), in which the elastic bodies include a first elastic body that has: the pair of the side plate portions each provided in a partially circular form to extend across three of the through holes adjacent to one another; and three of the connecting portions respectively inserted in the three through holes to connect the pair of the side plate portions.
(8) The sprocket according to any one of the above (1) to (7), in which the elastic bodies include a second elastic body that has: the pair of the side plate portions each provided in a partially circular form to extend across two of the through holes adjacent to each other; and two of the connecting portions inserted in the two through holes to connect the pair of the side plate portions.
(9) The sprocket according to any one of the above (1) to (8), in which the divided bodies are made of a material that contains nitrile rubber, and at least one of a hindered-amine based antioxidant and a phenol based antioxidant.
(10) The sprocket according to any one of the above (1) to (9), in which each of the divided bodies includes one of an injection molded article and a compression molded article.
(11) The sprocket according to any one of the above (1) to (10), in which each of the divided bodies has a loss factor tan δ of 0.05 or more.

### ADVANTAGEOUS EFFECTS OF THE INVENTION

In the sprocket according to the present invention, the plurality of elastic bodies provided to the sprocket body come into contact with a roller chain wound around the sprocket body, whereby noise due to engagement between the sprocket body and the roller chain can be reduced.

In addition, if two or three types of elastic bodies that are different in the number of connecting portions are prepared, it is possible to conduct production at low cost without increasing the types of elastic bodies even for sprocket bodies that are different in the number of teeth and the diameter. For example, if a first elastic body having three connecting portions and a second elastic body having two connecting portions are prepared, it is possible to provide the elastic bodies at desired positions even for sprocket bodies that are different in the number of teeth, by using only the first elastic bodies or only the second elastic bodies, or by combining the first elastic bodies and the second elastic bodies in any numbers. In addition, it is possible to attach elastic bodies having the same structure even for sprocket bodies that are different in the diameter and the pitch of teeth, by attaching the elastic bodies to each sprocket body in a state where the side plate portions are each elastically deformed to adjust the radius of curvature thereof or the pitch of the connecting portions is adjusted.

Further, at the plurality of connecting portions inserted in the plurality of through holes adjacent to each other in the sprocket body, each elastic body is divided into a pair of divided bodies having side plate portions provided in a partially-circular form across the plurality of through holes adjacent to each other. Therefore, as compared to the case of attaching an elastic body individually to each of a plurality of through holes, the number of steps in attachment of the elastic bodies to the sprocket body is significantly decreased, whereby productivity of the sprocket can be improved.

### BRIEF DESCRIPTION OF THE DRAWINGS

[FIG. 1] FIG. 1 is a front view of a sprocket and a specific part of a roller chain wound around the sprocket.
[FIG. 2] FIG. 2 is a perspective view of the sprocket.
[FIG. 3] FIG. 3 is an exploded perspective view of a sprocket body and some of elastic bodies attached thereto.
[FIG. 4] FIG. 4 is a sectional view taken along the line IV-IV in FIG. 1.
[FIG. 5A] FIG. 5A is a vertical sectional view of a specific part of a sprocket using elastic bodies having another structure.
[FIG. 5B] FIG. 5B is a vertical sectional view of a specific part of a sprocket using elastic bodies having still another structure.
[FIG. 5C] FIG. 5C is a vertical sectional view of a specific part of a sprocket using elastic bodies having still another structure.
[FIG. 5D] FIG. 5D is a vertical sectional view of a specific part of a sprocket including elastic bodies each formed by connecting divided bodies using a connection member.
[FIG. 5E] FIG. 5E is a vertical sectional view of a specific part of a sprocket including elastic bodies each formed by connecting divided bodies using a connection member having another structure.
[FIG. 6] FIG. 6 is a front view of a sprocket to which elastic bodies having still another structure are attached.
[FIG. 7] FIG. 7 is an exploded perspective view of a sprocket body of the sprocket and one of the elastic bodies attached thereto.

### DESCRIPTION OF EMBODIMENTS

Hereinafter, embodiments of the present invention will be described with reference to the drawings.

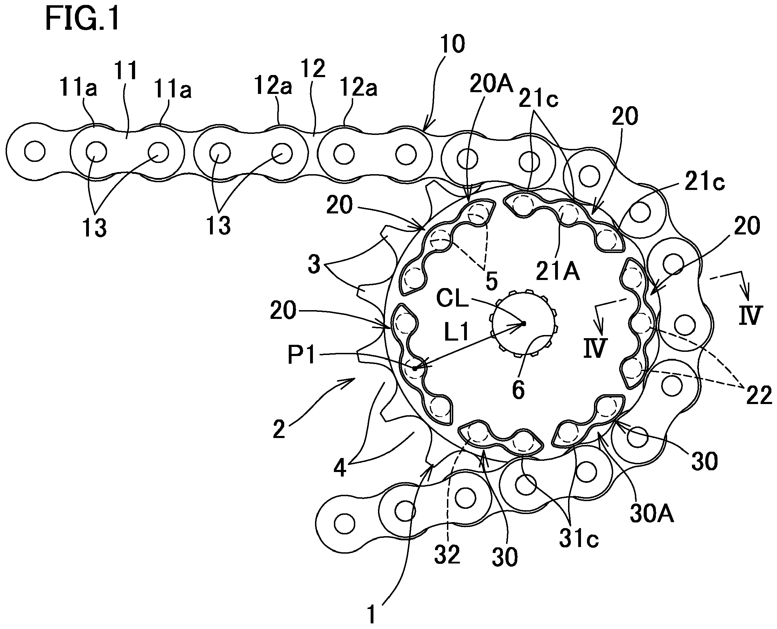

As shown in FIG. 1, a sprocket 1 includes a sprocket body 2 having an outer periphery provided with a plurality of teeth 3 engaging with a roller chain 10, and four first elastic bodies 20 and two second elastic bodies 30 provided in an annular form at the outer peripheral part of the sprocket body 2. The first elastic bodies 20 and the second elastic bodies 30 correspond to a plurality of elastic bodies.

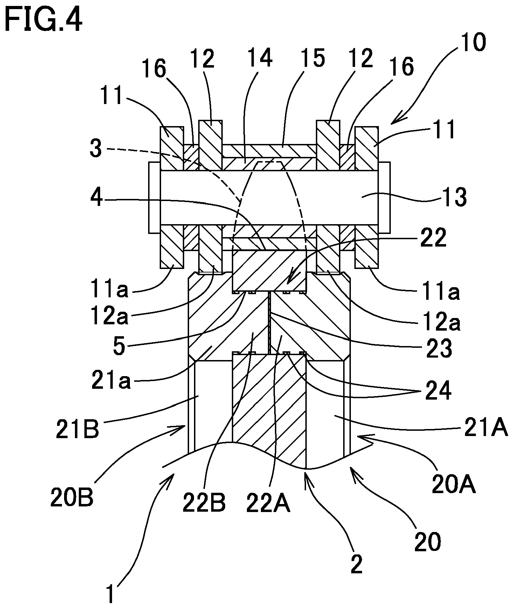

The roller chain 10 has a well-known structure as follows. That is, as shown in FIG. 1 and FIG. 4, the roller chain 10 includes a pair of outer link plates 11 disposed in parallel so as to be spaced from each other, and a pair of inner link plates 12 disposed in parallel so as to be spaced from each other. The pair of outer link plates 11 and the pair of inner link plates 12 are connected alternately and in an endless loop form by link pins 13. A bush 14 is externally fitted to each link pin 13, and a roller 15 is externally fitted to each bush 14 so as to be rotatable. It is noted that reference character 16 denotes a seal ring for sealing grease applied between the bush 14 and the link pin 13. For the roller chain, a structure other than such a well-known structure as shown in FIG. 1 and FIG. 4, e.g., a structure not having the seal ring 16 may be employed.

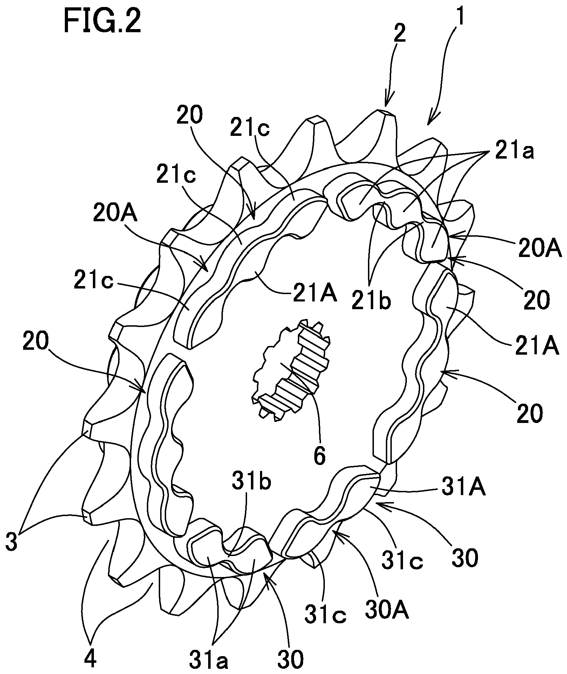

The sprocket body 2 is formed of a disk-like member made from a metal material such as carbon steel or alloy steel. The outer periphery of the sprocket body 2 is provided with a plurality of (in FIG. 2, sixteen) teeth 3 engaging with the roller chain 10, and a plurality of (in FIG. 2, sixteen) tooth grooves 4 provided between the teeth 3 adjacent to each other, each tooth groove 4 being fittable with the roller 15 of the roller chain 10. The center part of the sprocket body 2 has a spline fitting hole 6 to which a shaft (not shown) is to be fitted so as not to be relatively rotatable. As the connection structure of the sprocket body 2 to a shaft, any connection structure other than spline fitting may be employed.

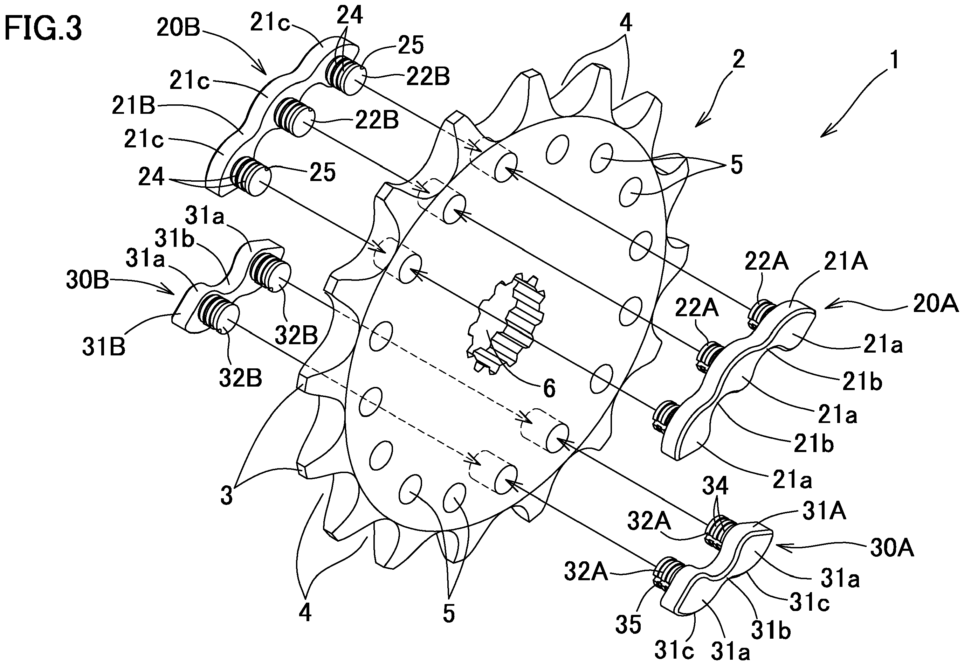

The sprocket body 2 has, at the radially inward side with respect to the tooth grooves 4, through holes 5 each having a center P1 at a position apart from a center line CL of the sprocket body 2 at a certain distance L1 so as to respectively correspond to circumferential positions of the tooth grooves 4. The number of the through holes 5 corresponds to the number of the tooth grooves 4, and the through holes 5 penetrate the sprocket body 2 in the plate-thickness direction. Each through hole 5 may be formed in any cross-sectional shape. In the present embodiment, the through hole 5 is formed in a round shape as shown in FIG. 3. However, the through hole 5 may be formed in an oval shape such as an elliptic shape or an oblong shape, or a polygonal shape such as a quadrangular shape or a hexagonal shape. It is preferable that the center P1 of the through hole 5 is located on a line extending in the radial direction of the sprocket body 2 so as to pass through the center part of the tooth groove 4, but the center P1 may be located at a position displaced from the line by a certain angle in the circumferential direction.

The first elastic body 20 includes a pair of partially-circular shaped side plate portions 21A, 21B respectively provided in both side surfaces of the sprocket body 2 to extend across three through holes 5 adjacent to one another, and three connecting portions 22 respectively inserted in the three through holes 5 adjacent to one another to connect the pair of side plate portions 21A, 21B. The first elastic body 20 is divided into a pair of divided bodies 20A, 20B at the connecting portions 22. The divided body 20A located on a first side of the sprocket body 2 includes a side plate portion 21A and connecting portions 22A, and the divided body 20B located on a second side of the sprocket body 2 includes a side plate portion 21B and connecting portions 22B. The divided bodies 20A, 20B may be divided at any position in the length direction of the connecting portions 22. However, it is preferable that the divided bodies 20A, 20B are divided at the center in the length direction of the connecting portions 22 because the divided bodies 20A, 20B can be formed of the same member and thus the production cost therefor can be reduced.

With an adhesive applied to distal ends of the connecting portions 22A, 22B of the divided bodies 20A, 20B, the connecting portions 22A, 22B are inserted into the through holes 5 from both sides of the sprocket body 2 and thus the distal ends of the connecting portions 22A, 22B are adhered to each other via adhesive layers 23, whereby the first elastic body 20 is attached to the sprocket body 2.

An outer periphery of each connecting portion 22A, 22B has two annular grooves 24 formed so as to be spaced from each other in the longitudinal direction (center-line direction of through hole 5) of the connecting portion 22A, 22B, and has one longitudinal groove 25 formed along the longitudinal direction of the connecting portion 22A, 22B. As described above, the annular grooves 24 and the longitudinal groove 25 are formed on each connecting portion 22A, 22B. In this situation, an adhesive is applied to not only the end surfaces of the connecting portions 22A, 22B but also the outer peripheries of the connecting portions 22A, 22B, at the time of attaching the first elastic body 20 to the sprocket body 2, whereby the connection strength between the connecting portions 22A, 22B and the sprocket body 2 can be enhanced owing to the adhesive filling the annular grooves 24 and the longitudinal groove 25. In addition, the connecting portions 22A, 22B are each formed to have an outer diameter slightly greater than the inner diameter of the through hole 5. Therefore, while the diameters of the connecting portions 22A, 22B are reduced by using the longitudinal grooves 25, the connecting portions 22A, 22B are press-fitted into the through holes 5, whereby the connection strength between the connecting portions 22A, 22B and the sprocket body 2 are further enhanced. However, the annular grooves 24 and the longitudinal groove 25 may be eliminated.

Each side plate portion 21A, 21B has three wide portions 21a respectively corresponding to the tooth grooves 4 and formed to be wide in the radial direction of the sprocket body 2, and has two narrow portions 21b having narrower widths than those of the wide portions 21a and each located between the wide portions 21a adjacent to each other. An outer periphery of each wide portion 21a has a contact portion 21c. Each first elastic body 20 is attached to the sprocket body 2 so that three contact portions 21c of a pair of the side plate portions are sequentially brought into pressure contact with inner peripheries of a pair of wide large end portions 12a of the inner link plates 12 of the roller chain 10 wound around the sprocket 1. The contact portions 21c may be formed so as to be brought into pressure contact with not only the large end portions 12a of the inner link plate 12 but also inner peripheries of a pair of wide large end portions 1 1a of the outer link plates 11. It is also possible that each side plate portion 21A, 21B is formed to have a uniform width, without providing the narrow portions 21b.

The second elastic body 30 includes a pair of partially-circular shaped side plate portions 31A, 31B respectively provided in both side surfaces of the sprocket body 2 to extend across two through holes 5 adjacent to each other, and two connecting portions 32 respectively inserted in the two through holes 5 adjacent to each other to connect the pair of side plate portions 31A, 31B. The second elastic body 30 is divided into a pair of divided bodies 30A, 30B at the connecting portions 32. The divided body 30A located on a first side of the sprocket body 2 includes a side plate portion 31A and connecting portions 32A, and the divided body 30B located on a second side of the sprocket body 2 includes a side plate portion 31B and connecting portions 32B. The divided bodies 30A, 30B may be divided at any position in the length direction of the connecting portions 32. However, it is preferable that the divided bodies 30A, 30B are divided at the center in the length direction of the connecting portions 32 because the divided bodies 30A, 30B can be formed of the same member and thus the production cost therefor can be reduced.

As in the case of the first elastic body 20, with an adhesive applied to distal ends of the connecting portions 32A, 32B of the divided bodies 30A, 30B, the connecting portions 32A, 32B are inserted into the through holes 5 from both sides of the sprocket body 2 and thus the distal ends of the connecting portions 32A, 32B are adhered to each other via adhesive layers (not shown), whereby the second elastic body 30 is attached to the sprocket body 2.

An outer periphery of each connecting portion 32A, 32B has two annular grooves 34 and one longitudinal groove 35 formed in the same structure as the annular grooves 24 and the longitudinal groove 25 of the first elastic body 20, so that the connection strength between the connecting portions 32A, 32B and the sprocket body 2 can be enhanced.

Each side plate portion 31A, 31B has two wide portions 31a respectively corresponding to the tooth grooves 4 and formed to be wide in the radial direction of the sprocket body 2, and has one narrow portion 31b having a narrower width than those of the wide portions 31a and each located between the wide portions 31a adj acent to each other. An outer periphery of each wide portion 31a has a contact portion 31c. Each second elastic body 30 is attached to the sprocket body 2 so that two contact portions 31c of a pair of the side plate portions 31A, 31B are sequentially brought into pressure contact with inner peripheries of a pair of wide large end portions 12a of the inner link plates 12 of the roller chain 10 wound around the sprocket 1. The contact portions 31c may be formed so as to be brought into pressure contact with not only the large end portions 12a of the inner link plate 12 but also inner peripheries of a pair of wide large end portions 1 1a of the outer link plates 11. It is also possible that each side plate portion 31A, 31B is formed to have a uniform width, without providing the narrow portion 31b.

The divided bodies 20A, 20B, 30A, 30B are formed as injection molded articles or compression molded articles. As the materials of the divided bodies 20A, 20B, 30A, 30B, rubber materials such as natural rubber, styrene butadiene rubber, chloroprene rubber, acrylonitrile rubber, butyl rubber, ethylene propylene rubber, urethane rubber, silicone rubber, fluoro rubber, and chlorosulfonated polyethylene rubber, may be employed, or an olefin-based, styrene-based, vinyl chloride-based, urethane-based, polyester-based, or polyamide-based thermoplastic elastomer material or the like may be employed. In particular, it is preferable to use a rubber material containing nitrile rubber (NBR) and at least one of a hindered-amine based antioxidant and a phenol based antioxidant. This is because, in this case, durability against contact with the roller chain 10 can be sufficiently ensured and noise caused due to engagement between the sprocket 1 and the roller chain 10 can be reduced. In addition, in order to effectively reduce noise in engagement, it is preferable that a loss factor tan δ of each divided body 20A, 20B, 30A, 30B is 0.05 or more.

The numbers of the wide portions 21a, the narrow portions 21b, and the connecting portions 22 provided at certain locations in the circumferential direction in the first elastic body 20 may be increased so as to form an elastic body that is attachable across four or more through holes 5 adjacent to one another.

In the sprocket 1, as shown in FIG. 2, four first elastic bodies 20 and two second elastic bodies 30 are attached to the sprocket body 2. The side plate portions 21A of the first elastic bodies 20 and the side plate portions 31A of the second elastic bodies 30, and the side plate portions 21B of the first elastic bodies 20 and the side plate portions 31B of the second elastic bodies 30, are respectively provided in annular forms on both side surfaces of the sprocket body 2. The wide portions 21a and the wide portions 31a are arranged on both sides of the sprocket body 2 so as to respectively correspond to all the sixteen tooth grooves 4. Therefore, when the roller chain 10 is wound around the sprocket 1 and the sprocket 1 is rotationally driven, the contact portions 21c, 31c formed on outer peripheries of the wide portions 21a, 31a are sequentially brought into pressure contact with the large end portions 12a of the inner link plates 12 of the roller chain 10 wound around the sprocket body 2 so as to be elastically deformed, whereby noise due to engagement between the sprocket 1 and the roller chain 10 is reduced.

In addition, since two types of elastic bodies, i.e., the first elastic bodies 20 and the second elastic bodies 30 are provided, the elastic bodies can be provided so as to correspond to all the tooth grooves 4 even for the sprocket bodies 2 that are different in the number of teeth and the diameter, and thus the types of elastic bodies are decreased, whereby the production cost for the sprocket 1 can be reduced. Further, the divided bodies 20A, 20B constituting the first elastic body 20 can be formed of the same member, and the divided bodies 30A, 30B constituting the second elastic body 30 can be formed of the same member. Therefore, the production cost for the sprocket 1 can be further reduced.

Examples of attaching the elastic bodies 20, 30 to the sprocket bodies that are different in the number of teeth and the diameter will be shown below. If the number of teeth of the sprocket body 2 is seventeen, five first elastic bodies 20 and one second elastic body 30 are attached to the sprocket body 2, whereby the contact portions 21c and 31c can be provided so as to correspond to all the tooth grooves 4. If the number of teeth of the sprocket body 2 is eighteen, six first elastic bodies 20 or nine second elastic bodies 30 are attached to the sprocket body 2, whereby the contact portions 21c or 31c can be provided so as to correspond to all the tooth grooves 4. In addition, it is possible to attach the elastic bodies at proper positions even for the sprocket bodies 2 that are different in the diameter and the pitch of teeth 3, by attaching the divided bodies 20A, 20B, 30A, 30B to the sprocket body 2 in a state in which the side plate portions 21A, 21B, 31A, 31B are each elastically deformed to adjust the radius of curvature thereof, or the pitch of the connecting portions 22, 32 is adjusted. Also, the adjustment of the radius of curvature can be easily performed by causing the side plate portions 21A, 21B, 31A, 31B to elastically deform around the narrow portions 21b and the narrow portions 31b. However, the contact portions 21c, 31c do not necessarily have to correspond to all the tooth grooves 4. In order to prevent interference with a bolt hole or the like for fixing the sprocket 1, the elastic bodies may be provided such that there are no contact portions for specific tooth grooves 4.

Further, the first elastic bodies 20 and the second elastic bodies 30 are each attached across a plurality of through holes 5. Accordingly, as compared to the case of performing attachment to each of the plurality of through holes 5 individually, the number of steps in attachment of the elastic bodies to the sprocket body 2 is significantly decreased, whereby productivity of the sprocket 1 can be improved.

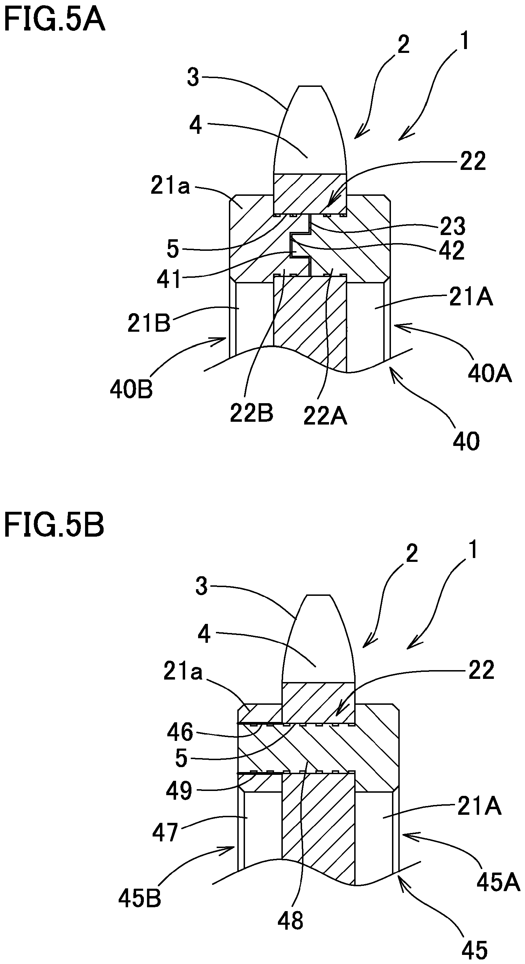

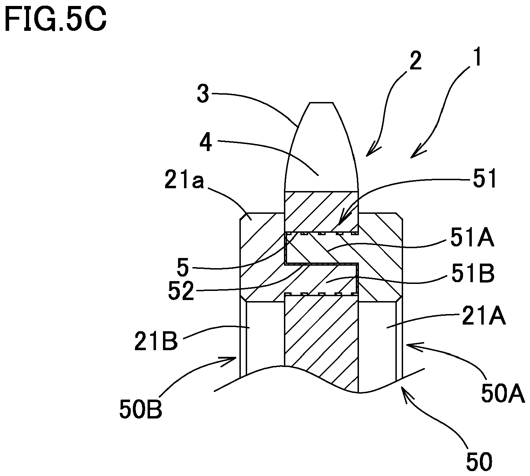

Next, sprockets according to other embodiments, which are obtained by partially modifying the structure of the sprocket 1 in the above embodiment, will be described. It is noted that the same members as those of the sprocket 1 in the above embodiment are denoted by the same reference characters, and the detailed description thereof is omitted.
(1) As shown in FIG. 5A, the sprocket body 2 may be provided with an elastic body 40 having divided bodies 40A, 40B formed in the same structure as the divided bodies 20A, 20B in the above embodiment except that a distal end surface of the connecting portion 22A is provided with a projection 41, a distal end surface of the connecting portion 22B is provided with a recess 42, the projection 41 is fitted to the recess 42, and distal ends of the connecting portion 22A and the connecting portion 22B are connected to each other via the adhesive layer 23. In this case, owing to recess-projection fitting between the projection 41 and the recess 42, the areas of adhesion surfaces of the connecting portions 22A, 22B are increased, whereby the connection strength therebetween can be improved.
(2) As shown in FIG. 5B, instead of the elastic body 20 including the divided bodies 20A, 20B in the above embodiment, an elastic body 45 including divided bodies 45A, 45B may be provided to the sprocket body 2. The divided body 45A has the same structure as the divided body 20A except that the divided body 45A has a connecting portion 48 formed by extending the connecting portion 22A of the divided body 20A. In the divided body 45B, the connecting portion 22B as in the divided body 20B is eliminated, and the divided body 45B includes a side plate portion 47 which has the same structure as the side plate portion 21B except that a through hole 46 fittable with the connecting portion 48 is provided to the side plate portion 21B. In this elastic body 45, with an adhesive applied to a distal-end outer periphery of the connecting portion 48, the connecting portion 48 is fitted to the through hole 46, whereby the divided bodies 45A, 45B are connected to each other. In this case, force in the direction of pulling out the connecting portion 48 acts in the shearing direction of an adhesive layer 49, and therefore the connection strength between both divided bodies 45A, 45B can be improved.
(3) As shown in FIG. 5C, instead of the elastic body 20 including the divided bodies 20A, 20B in the above embodiment, an elastic body 50 including divided bodies 50A, 50B may be provided to the sprocket body 2. The elastic body 50 includes, instead of the connecting portion 22 of the elastic body 20, a connecting portion 51 divided along a plane including the center line CL of the sprocket body 2 and the center P1 of the connecting portion 22. The divided body 50A includes one connecting portion 51A of the divided connecting portions 51, and the divided body 50B includes the other connecting portion 51B of the divided connecting portions 51. In this elastic body 50, with an adhesive applied between fitting surfaces of the connecting portions 51A, 51B, the connecting portions 51A, 51B are fitted to each other in a columnar shape, whereby the divided bodies 50A, 50B are connected via an adhesive layer 52. Thus, the adhesion areas of the connecting portions 51A, 51B are increased, whereby the connection strength therebetween can be improved. In addition, as the divided bodies 50A, 50B, the ones having the same structure can be employed, so that the types of elastic bodies are decreased and the production cost therefor can be reduced. In the case where the cross-sectional shape of the through hole 5 is formed in a shape other than a round shape and the connecting portion 51 is formed in a shape suited to the through hole 5, the connecting portion 51 is formed such that the connecting portion 51 is divided to be in mirror-symmetry with respect to a plane including the center line CL of the sprocket body 2 and the center P1 of the connecting portion 51. Thus, the divided bodies 50A, 50B can be formed of the same member and the production cost therefor can be reduced.
(4) In the first elastic body 20, the connecting portions 22A, 22B are connected using only an adhesive. However, in order to enhance the connection strength, the connecting portions 22A, 22B may be connected using a connection member that is a separate member, in combination with an adhesive or without an adhesive.

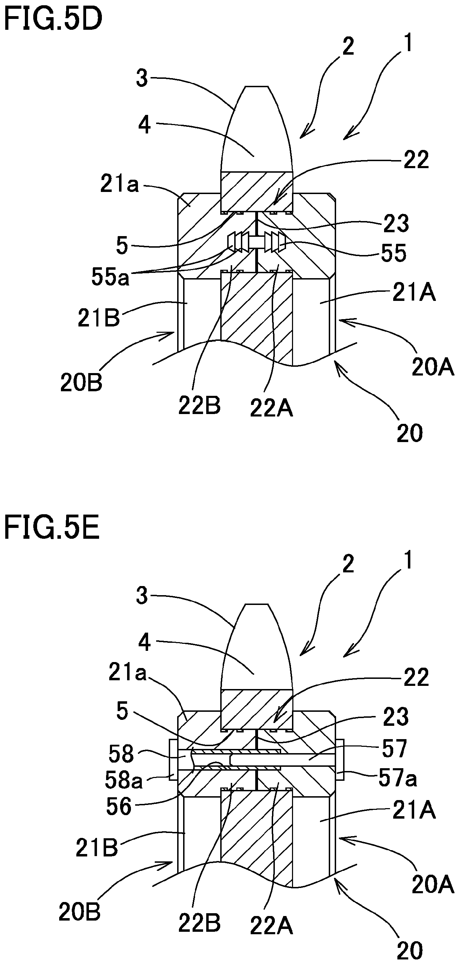

For example, as shown in FIG. 5D, a connection member 55 having a plurality of come-off preventing portions 55a around an outer periphery thereof may be used, and the connecting portions 22A, 22B can be connected by press-fitting the connection member 55 into the distal-end sides of the connecting portions 22A, 22B across the connecting portions 22A, 22B. Alternatively, as shown in FIG. 5E, a pin member 57 having a disk-like stopper portion 57a at one end thereof and a cylindrical member 58 having a disk-like stopper portion 58a at one end thereof may be used. In this case, a through hole 56 is provided in the connecting portions 22A, 22B so as to penetrate the connecting portions 22A, 22B. Then, the pin member 57 and the cylindrical member 58 are inserted into the through hole 56 from both sides of the first elastic body 20, and the distal end of the pin member 57 is press-fitted into the distal end of the cylindrical member 58, whereby the connecting portions 22A, 22B can be connected to each other. Further, with the through hole 56 provided so as to penetrate the connecting portions 22A, 22B, the connecting portions 22A, 22B may be connected using rivets or a bolt and nut.

The configurations of the above (1) to (4) are applicable also to the second elastic body 30, in the same manner as in the first elastic body 20.

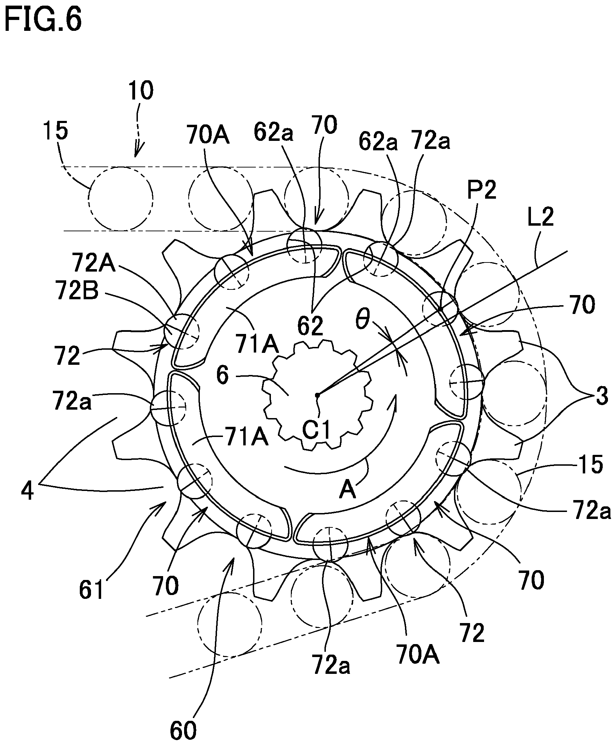

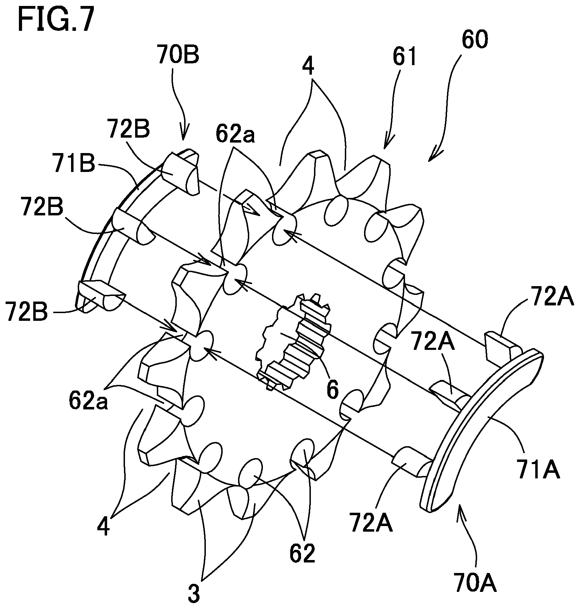

(5) In the sprocket 1 according to the above embodiment, the elastic bodies 20, 30 are brought into contact with the inner link plates 12 of the roller chain 10 so that noise is reduced. Here, as in a sprocket 60 shown in FIG. 6 and FIG. 7, an elastic body 70 may be brought into contact with the roller 15 of the roller chain 10 so that noise is reduced.

As shown in FIG. 6 and FIG. 7, the sprocket 60 includes a sprocket body 61 and four elastic bodies 70 provided at the outer peripheral part of the sprocket body 61.

The sprocket body 61 is formed of a disk-like member made from a metal material such as carbon steel or alloy steel. The outer periphery of the sprocket body 61 is provided with a plurality of (in FIG. 6, twelve) teeth 3 engaging with the roller chain 10, and a plurality of (in FIG. 6, twelve) tooth grooves 4 provided between the teeth 3 adjacent to each other, each tooth groove 4 being fittable with the roller 15 of the roller chain 10. The center part of the sprocket body 61 has a spline fitting hole 6 to which a shaft (not shown) is to be fitted so as not to be relatively rotatable. As the connection structure of the sprocket body 61 to a shaft, any connection structure other than spline fitting may be employed.

The outer peripheral part of the sprocket body 61 has, at the inward side of the tooth grooves 4, through holes 62 each having a center P2 at a position displaced by a certain angle 0 frontward in the rotation direction A from a line L2 extending in the radial direction of the sprocket body 61 so as to pass through a bottom portion of each tooth groove 4. The through holes 62 penetrate the sprocket body 61 in the plate-thickness direction. Each through hole 62 is provided with an opening portion 62a opening to the tooth groove 4. The through hole 62 may be formed in any cross-sectional shape. In the present embodiment, the through hole 62 is formed in a round shape as shown in FIG. 6 and FIG. 7. However, the through hole 62 may be formed in an oval shape such as an elliptic shape or an oblong shape, or a polygonal shape such as a quadrangular shape or a hexagonal shape.

The elastic body 70 can be formed of the same material as the first elastic body 20 in the above embodiment. The elastic body 70 includes a pair of partially-circular shaped side plate portions 71A, 71B respectively provided in both side surfaces of the sprocket body 61 to extend across three through holes 62 adjacent to one another, and three columnar connecting portions 72 respectively inserted in the three through holes 62 adjacent to one another to connect the pair of side plate portions 71A, 71B. Each connecting portion 72 is provided with a protrusion 72a protruding into the tooth groove 4 through the opening portion 62a. The elastic body 70 is divided into a pair of divided bodies 70A, 70B at the connecting portions 72. The divided body 70A located on a first side of the sprocket body 61 includes a side plate portion 71A and connecting portions 72A, and the divided body 70B located on a second side of the sprocket body 61 includes a side plate portion 71B and connecting portions 72B.

The connecting portions 72A, 72B are formed by dividing the connecting portion 72 into semicircular column shapes along a plane including the center line CL of the sprocket body 61 and the center P2 of the connecting portion 72. With an adhesive applied to the connecting portions 72A, 72B, the connecting portions 72A, 72B are inserted into the through holes 62 from both sides of the sprocket body 61 and thus the connecting portions 72A, 72B are adhered to each other via the adhesive, whereby the elastic body 70 is attached to the sprocket body 61. Since the connecting portion 72 is divided as described above, the divided bodies 70A, 70B can be formed of the same member and thus the production cost therefor can be reduced. In the case where the cross-sectional shape of the through hole 62 is formed in a shape other than a round shape and the connecting portion 72 is formed in a shape suited to the through hole 62, the connecting portion 72 is formed such that the connecting portion 72 is divided to be in mirror-symmetry with respect to a plane including the center line CL of the sprocket body 61 and the center P2 of the connecting portion 72. Thus, the divided bodies can be formed of the same member and the production cost therefor can be reduced.

In this sprocket 60, each roller 15 of the roller chain 10 engaging with the sprocket 60 comes into contact with the protrusion 72a, whereby noise when the roller 15 comes into contact with the tooth bottom can be reduced. In addition, as in the elastic bodies 20, 30 in the above embodiment, since the divided bodies 70A, 70B can be formed of the same member, the production cost for the sprocket 60 can be further reduced. Furthermore, since the elastic body 70 is provided across three through holes 62, the number of steps in attachment of the elastic body 70 to the sprocket body 61 is decreased, whereby productivity of the sprocket 60 can be improved.

In FIG. 6, the side plate portions 71A, 71B are formed so that outer peripheries thereof do not come into contact with the large end portions 12a of the inner link plates 12. However, the side plate portions 71A, 71B may be formed so that outer peripheries thereof come into contact with the large end portions 12a, whereby noise due to engagement with the roller chain 10 can be more effectively prevented by the protrusions 72a and the side plate portions 71A, 71B.

As in the side plate portions 21A, 21B of the first elastic body 20 in the above embodiment, wide portions and narrow portions may be formed alternately in the side plate portions 71A, 71B, and the curvatures of the side plate portions 71A, 71B may be adjusted mainly on the narrow portions, whereby adaptation to the sprocket bodies 61 that are different in the diameter can be easily performed.

It is also possible to use, alone or together with the elastic body 70, a second elastic body including a pair of partially-circular shaped side plate portions extending across two through holes 62 adjacent to each other, and two connecting portions inserted in two through holes 62 adjacent to each other to connect the pair of side plate portions. In this case, as in the elastic bodies 20, 30 in the above embodiment, the elastic bodies 70 and the second elastic bodies may be optionally combined, to thereby allow the elastic bodies to be attached even to the sprocket bodies 61 that are different in the number of teeth and the number of the through holes 62.

As in the above embodiment, the connecting portion 72 of the elastic body 70 may be divided at a certain location in the length direction of the connecting portion 72. Alternatively, the connecting portion 72 of the elastic body 70 may be divided as described in the above (1) or (2), or the connecting portions may be connected using a separate member in combination as described in the above (4).

### DESCRIPTION OF THE REFERENCE CHARACTERS

- 1: sprocket
- 2: sprocket body
- 3: tooth
- 4: tooth groove
- 5: through hole
- 6: spline fitting hole
- 10: roller chain
- 11: outer link plate
- 11a: large end portion
- 12: inner link plate
- 12a: large end portion
- 13: link pin
- 14: bush
- 15: roller
- 16: seal ring
- 20: first elastic body
- 20A: divided body
- 20B: divided body
- 21A: side plate portion
- 21B: side plate portion
- 21a: wide portion
- 21b: narrow portion
- 21c: contact portion
- 22: connecting portion
- 22A: connecting portion
- 22B: connecting portion
- 23: adhesive layer
- 24: annular groove
- 25: longitudinal groove
- 30: second elastic body
- 30A: divided body
- 30B: divided body
- 31A: side plate portion
- 31B: side plate portion
- 31a: wide portion
- 31b: narrow portion
- 31c: contact portion
- 32: connecting portion
- 32A: connecting portion
- 32B: connecting portion
- 34: annular groove
- 35: longitudinal groove
- 40: elastic body
- 40A: divided body
- 40B: divided body
- 41: projection
- 42: recess
- 45: elastic body
- 45A: divided body
- 45B: divided body
- 46: through hole
- 47: side plate portion
- 48: connecting portion
- 49: adhesive layer
- 50: elastic body
- 50A: divided body
- 50B: divided body
- 51: connecting portion
- 51A: connecting portion
- 51B: connecting portion
- 52: adhesive layer
- 55: connection member
- 55a: come-off preventing portion
- 56: through hole
- 57: pin member
- 57a: stopper portion
- 58: cylindrical member
- 58a: stopper portion
- 60: sprocket
- 61: sprocket body
- 62: through hole
- 62a: opening portion
- 70: elastic body
- 70A: divided body
- 70B: divided body
- 71A: side plate portion
- 71B: side plate portion
- 72: connecting portion
- 72A: connecting portion
- 72B: connecting portion
- 72a: protrusion

## Claims

1. A sprocket (1, 60) comprising:
a sprocket body (2, 61) having an outer periphery provided with: a plurality of teeth (3) engaging with a roller chain (10); and tooth grooves (4) each provided between the teeth (3) adjacent to each other, each of the tooth grooves (4) being fittable with a roller (15) of the roller chain (10), and
a plurality of elastic bodies (20, 30, 70) provided in the sprocket body (2, 61), to be contactable with the roller chain (10), wherein
the sprocket body (2,61) is provided with through holes (5, 62) at positions apart from a center (CL) of the sprocket body (2, 61) at a certain distance (L1) to respectively correspond to circumferential positions of the tooth grooves (4), the through holes (5,62) penetrating the sprocket body (2, 61) in a plate-thickness direction,
the elastic bodies (20, 30, 70) each have a pair of partially-circular shaped side plate portions (21A, 21B ,31A, 31B, 71A, 71B) respectively provided in both side surfaces of the sprocket body (2, 61) to extend across the through holes (5, 62) adjacent to each other, and a plurality of connecting portions (22, 32, 72) respectively inserted in the through holes (5,62) adjacent each other to connect the pair of the side plate portions (21A, 21B ,31A, 31B, 71A, 71B), and
each of the elastic bodies (20, 30, 70) is divided into a pair of divided bodies (20A, 20B, 30A, 30B, 70A, 70B) at the connecting portions (22, 32, 72).

2. The sprocket (1) according to claim 1, wherein
each of the side plate portions (21A, 21B, 31A, 31B, 71A, 71B) is provided with a contact portion (21c, 31c) that is contactable to a link plate (12) forming the roller chain (10).

3. The sprocket (1) according to claim 2, wherein
each of the side plate portions (21A, 21B, 31A, 31B, 71A, 71B) is provided with; a plurality of wide portions (21a, 31a) each corresponding to a corresponding one of the tooth grooves (4), and a narrow portion (21b, 31b) having a width narrower than a width of each of the wide portions (21a, 31a), between the wide portions (21a, 31a) adjacent to each other, and
the contact portion (21c, 31c) is provided in an outer periphery of the wide portions (21a, 31a).

4. The sprocket (60) according to any one of claims 1 to 3, wherein
each of the through holes (62) is provided with an opening portion (62a) opening to the corresponding one of the tooth grooves (4), and
each of the connecting portions (72A, 72B) is provided with a protrusion (72a) protruding into the tooth groove (4) through the opening portion (62a) so as to be contactable with the roller (15).

5. The sprocket (60) according to claim 4, wherein
the opening portion (62a) is provided at a position corresponding to a front side of the tooth groove (4) in a rotation direction of the sprocket body (61).

6. The sprocket (1, 60) according to any one of claims 1 to 5, wherein
the pair of the divided bodies (20A, 20B, 30A, 30B, 70A, 70B) are formed of a same member.

7. The sprocket (1) according to any one of claims 1 to 6, wherein
the elastic bodies (20,30) include a first elastic body (20) that has: the pair of the side plate portions (21A, 21B) each provided in a partially circular form to extend across three of the through holes (5) adjacent to one another; and three of the connecting portions (22A, 22B) respectively inserted in the three through holes (5) to connect the pair of the side plate portions (21A, 21B).

8. The sprocket (1) according to any one of claims 1 to 7, wherein
the elastic bodies include a second elastic body (20, 30) that has: the pair of the side plate portions (31A, 31B) each provided in a partially circular form to extend across two of the through holes (5) adjacent to each other; and two of the connecting portions (32A, 32B) inserted in the two through holes (5) to connect the pair of the side plate portions (31A, 31B).

9. The sprocket (1, 60) according to any one of claims 1 to 8, wherein
the divided bodies (20A, 20B, 30A, 30B, 70A, 70B) are made of a material that contains nitrile rubber, and at least one of a hindered-amine based antioxidant and a phenol based antioxidant.

10. The sprocket (1, 60) according to any one of claims 1 to 9, wherein
each of the divided bodies (20A, 20B, 30A, 30B, 70A, 70B) includes one of an injection molded article and a compression molded article.

11. The sprocket (1, 60) according to any one of claims 1 to 10, wherein
each of the divided bodies (20A, 20B, 30A, 30B, 70A, 70B) has a loss factor tan δ of 0.05 or more.

## Patentansprüche

1. Kettenrad (1, 60), umfassend:
einen Kettenradkörper (2, 61) mit einem Außenumfang, der versehen ist mit: einer Vielzahl von Zähnen (3), die mit einer Rollenkette (10) in Eingriff sind; und Zahnrillen (4), die jeweils zwischen den nebeneinanderliegenden Zähnen (3) vorgesehen sind, wobei jede der Zahnrillen (4) an eine Rolle (15) der Rollenkette (10) anpassbar sein kann, und
eine Vielzahl von elastischen Körpern (20, 30, 70) im Kettenradkörper (2, 61), die versehen ist, um mit der Rollenkette (10) kontaktierbar zu sein, wobei
der Kettenradkörper (2, 61) bei Positionen entfernt von einem Zentrum (CL) des Kettenradkörpers (2, 61) in einem bestimmten Abstand (L1) mit Durchgangsbohrungen (5, 62) versehen ist, um jeweils den Umfangspositionen der Zahnrillen (4) zu entsprechen, wobei die Durchgangsbohrungen (5, 62) den Kettenradkörper (2, 61) in einer Plattendickenrichtung durchdringen,
die elastischen Körper (20, 30, 70) jeweils ein Paar von teilkreisförmigen Seitenplattenteilbereichen (21A, 21B, 31A, 31B, 71A, 71B) haben, die jeweils in beiden Seitenoberflächen des Kettenradkörpers (2, 61) vorgesehen sind, um sich über die nebeneinanderliegenden Durchgangsbohrungen (5, 62) zu erstrecken, und eine Vielzahl von Verbindungsteilbereichen (22, 32, 72), die jeweils in die nebeneinanderliegenden Durchgangsbohrungen (5, 62) eingefügt sind, um das Paar der Seitenplattenteilbereiche (21A, 21B, 31A, 31B, 71A, 71B) zu verbinden, und
jeder der elastischen Körper (20, 30, 70) an den Verbindungsteilbereichen (22, 32, 72) in ein Paar von geteilten Körpern (20A, 20B, 30A, 30B, 70A, 70B) aufgeteilt ist.

2. Kettenrad (1) nach Anspruch 1, wobei
jeder der Seitenplattenteilbereiche (21A, 21B, 31A, 31B, 71A, 71B) mit einem Kontaktteilbereich (21c, 31c) versehen ist, der mit einer Verbindungsplatte (12) kontaktierbar ist, die die Rollenkette (10) ausbildet.

3. Kettenrad (1) nach Anspruch 2, wobei
jeder der Seitenplattenteilbereiche (21A, 21B, 31A, 31B, 71A, 71B) versehen ist mit: einer Vielzahl von breiten Teilbereichen (21a, 31a), die jeweils einer entsprechenden der Zahnrillen (4) entsprechen, und einem schmalen Teilbereich (21b, 31b) mit einer Breite, die schmaler als eine Breite von jedem der breiten Teilbereiche (21a, 31a) ist, zwischen den nebeneinanderliegenden breiten Teilbereichen (21a, 31a), und
der Kontaktteilbereich (21C, 31C) in einem Außenumfang der breiten Teilbereiche (21A, 31A) vorgesehen ist.

4. Kettenrad (60) nach einem der Ansprüche 1 bis 3, wobei
jede der Durchgangsbohrungen (62) mit einem Öffnungsteilbereich (62a) versehen ist, der sich zur entsprechenden der Zahnrillen (4) öffnet, und
jeder der Verbindungsteilbereiche (72A, 72B) mit einem Vorsprung (72A) versehen ist, der durch den Öffnungsteilbereich (62A) in die Zahnrille (4) vorsteht, um mit der Rolle (15) kontaktierbar zu sein.

5. Kettenrad (60) nach Anspruch 4, wobei
der Öffnungsteilbereich (62a) bei einer Position vorgesehen ist, die einer Vorderseite der Zahnrille (4) in einer Drehrichtung des Kettenradkörpers (61) entspricht.

6. Kettenrad (1, 60) nach einem der Ansprüche 1 bis 5, wobei
das Paar der geteilten Körper (20A, 20B, 30A, 30B, 70A, 70B) aus einem selben Element ausgebildet ist.

7. Kettenrad (1) nach einem der Ansprüche 1 bis 6, wobei
die elastischen Körper (20, 30) einen ersten elastischen Körper (20) enthalten, der folgendes aufweist: das Paar der Seitenplattenteilbereiche (21A, 21B), die jeweils in einer Teilkreisform vorgesehen sind, um sich über drei der nebeneinanderliegenden Durchgangsbohrungen (5) zu erstrecken; und drei der Verbindungsteilbereiche (22A, 22B), die jeweils in den drei Durchgangsbohrungen (5) eingefügt sind, um das Paar der Seitenplattenteilbereiche (21A, 21B) zu verbinden.

8. Kettenrad (1) nach einem der Ansprüche 1 bis 7, wobei
die elastischen Körper einen zweiten elastischen Körper (20, 30) enthalten, der folgendes aufweist: das Paar der Seitenplattenteilbereiche (31A, 31B), die jeweils in einer Teilkreisform vorgesehen sind, um sich über zwei der nebeneinanderliegenden Durchgangsbohrungen (5) zu erstrecken; und zwei der Verbindungsteilbereiche (32A, 32B), die in den zwei Durchgangsbohrungen (5) eingefügt sind, um das Paar der Seitenplattenteilbereiche (31A, 31B) zu verbinden.

9. Kettenrad (1, 60) nach einem der Ansprüche 1 bis 8, wobei
die geteilten Körper (20A, 20B, 30A, 30B, 70A, 70B) aus einem Material hergestellt sind, das Nitrilkautschuk enthält, und wenigstens eines von einem Antioxidans auf der Basis von gehindertem Amin und einem Antioxidans auf der Basis von Phenol.

10. Kettenrad (1, 60) nach einem der Ansprüche 1 bis 9, wobei
jeder der geteilten Körper (20A, 20B, 30A, 30B, 70A, 70B) eines von einem Spritzgussteil und einem Formpressteil enthält.

11. Kettenrad (1, 60) nach einem der Ansprüche 1 bis 10, wobei
jeder der geteilten Körper (20A, 20B, 30A, 30B, 70A, 70B) einen Verlustfaktor tanδ von 0,05 oder mehr hat.

## Revendications

1. Un pignon (1, 60) comprenant:
un corps de pignon (2, 61) ayant une périphérie externe pourvue : d'une pluralité de dents (3) venant en engagement avec une chaîne à rouleaux (10) ; et des rainures de dents (4) aménagées chacune entre les dents (3) adjacentes l'une à l'autre, chacune des rainures de dents (4) étant apte à venir en relation ajustée avec un rouleau (15) de la chaîne à rouleaux (10), et
une pluralité de corps élastiques (20, 30, 70) prévus dans le corps de pignon (2, 61), de façon à être apte à venir en contact avec la chaîne à rouleaux (10),
le corps de pignon (2, 61) étant pourvu de trous traversants (5, 62) en des positions éloignées d'un centre (CL) du corps de pignon (2, 61) à une certaine distance (L1) de façon à correspondre à des positions circonférentielles respectives des rainures de dents (4), les trous traversants (5, 62) pénétrant dans le corps de pignon (2, 61) dans une direction d'épaisseur de plaque,
les corps élastiques (20, 30, 70) ayant chacun une paire de parties en plaques latérales (21A, 21B, 31A, 31B, 71A, 71B) de forme partiellement circulaire prévues respectivement dans les deux surfaces latérales du corps de pignon (2, 61) de façon à s'étendre à travers les trous traversants (5, 62) adjacents l'un à l'autre, et une pluralité de parties de connexion (22, 32, 72) insérées dans les trous traversants (5, 62) respectifs adjacents l'un à l'autre de façon à relier la paire de parties en plaques latérales (21A, 21B, 31A, 31B, 71A, 71B), et
chacun des corps élastiques (20, 30, 70) est divisé en une paire de corps divisés (20A, 20B, 30A, 30B, 70A, 70B) au niveau des parties de connexion (22, 32, 72).

2. Le pignon (1) selon la revendication 1, dans lequel
chacune des parties en plaques latérales (21A, 21B, 31A, 31B, 71A, 71B) est pourvue d'une partie de contact (21c, 31c) qui est apte à être mise en contact avec une plaque de liaison (12) formant la chaîne à rouleaux (10).

3. Le pignon (1) selon la revendication 2, dans lequel
chacune des parties en plaques latérales (21A, 21B, 31A, 31B, 71A, 71B) est pourvue d'une pluralité de parties larges (21a, 31a) correspondant chacune à l'une, correspondante, des rainures de dents (4), et une partie étroite (21b, 31b) ayant une largeur plus étroite qu'une largeur de chacune des parties larges (21a, 31a), entre les parties larges (21a, 31a) adjacentes l'une à l'autre, et
la partie de contact (21c, 31c) est prévue dans une périphérie externe des parties larges (21a, 31a).

4. Le pignon (60) selon l'une quelconque des revendications 1 à 3, dans lequel
chacun des trous traversants (62) est pourvu d'une partie d'ouverture (62a) s'ouvrant sur l'une, correspondante, des rainures de dents (4), et
chacune des parties de connexion (72A, 72B) est pourvue d'une saillie (72a) faisant saillie dans la rainure de dent (4) à travers la partie d'ouverture (62a) de manière à être apte à venir en contact avec le rouleau (15).

5. Le pignon (60) selon la revendication 4, dans lequel
la partie d'ouverture (62a) est prévue en une position correspondant à un côté avant de la rainure de dent (4) dans une direction de rotation du corps de pignon (61).

6. Le pignon (1, 60) selon l'une quelconque des revendications 1 à 5, dans lequel
la paire des corps divisés (20A, 20B, 30A, 30B, 70A, 70B) est formée d'un même élément.

7. Le pignon (1) selon l'une quelconque des revendications 1 à 6, dans lequel
les corps élastiques (20, 30) comprennent un premier corps élastique (20) qui a: la paire des parties en plaques latérales (21A, 21B) prévues chacune sous une forme partiellement circulaire de façon à s'étendre à travers trois des trous traversants (5) adjacents les uns aux autres ; et trois des parties de connexion (22A, 22B) insérées respectivement dans les trois trous traversants (5) pour relier la paire de parties en plaques latérales (21A, 21B).

8. Le pignon (1) selon l'une quelconque des revendications 1 à 7, dans lequel
les corps élastiques comprennent un deuxième corps élastique (20, 30) qui a : la paire de parties en plaques latérales (31A, 31B) prévues chacune sous une forme partiellement circulaire de façon à s'étendre à travers deux des trous traversants (5) adjacents l'un à l'autre ; et deux des parties de connexion (32A, 32B) insérées dans les deux trous traversants (5) de façon à relier la paire des parties en plaques latérales (31A, 31B).

9. Le pignon (1, 60) selon l'une quelconque des revendications 1 à 8, dans lequel
les corps divisés (20A, 20B, 30A, 30B, 70A, 70B) sont faits d'un matériau qui contient du caoutchouc nitrile, et au moins un parmi un antioxydant à base d'amine encombrée et un antioxydant à base de phénol.

10. Le pignon (1, 60) selon l'une quelconque des revendications 1 à 9, dans lequel
chacun des corps divisés (20A, 20B, 30A, 30B, 70A, 70B) comprend l'un parmi un article moulé par injection et un article moulé par compression.

11. Le pignon (1,60)selon l'une quelconque des revendications 1 à 10, dans lequel
chacun des corps divisés (20A, 20B, 30A, 30B, 70A, 70B) a un facteur de perte tan δ de 0,05 ou plus.
